(19) Europäisches Patentamt
European Patent Office
Office européen des brevets

(11) EP 0 599 597 B1

(12) **EUROPEAN PATENT SPECIFICATION**

(45) Date of publication and mention of the grant of the patent:
**17.02.1999 Bulletin 1999/07**

(51) Int Cl.[6]: **H04N 9/68**

(21) Application number: **93309321.3**

(22) Date of filing: **23.11.1993**

# (54) Colour burst signal detection

Farbsynchronsignaldetektion

Détection du signal de salve de couleur

(84) Designated Contracting States:
**DE FR GB**

(30) Priority: **24.11.1992 KR 9222179**

(43) Date of publication of application:
**01.06.1994 Bulletin 1994/22**

(73) Proprietor: **SAMSUNG ELECTRONICS CO., LTD.**
**Suwon-city, Kyungki-do 441-373 (KR)**

(72) Inventor: **Kim, Dong-ha**
**Jungkyebon-dong, Nowon-gu, Seoul (KR)**

(74) Representative: **Stanley, David William et al**
**APPLEYARD LEES**
**15 Clare Road**
**Halifax West Yorkshire HX1 2HY (GB)**

(56) References cited:
**EP-A- 0 098 723** **EP-A- 0 164 274**

- **PATENT ABSTRACTS OF JAPAN vol. 13, no. 150 (E-742) 12 April 1989 & JP-A-63 309 088 (SANYO) 16 December 1988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 599 597 B1

Printed by Jouve, 75001 PARIS (FR)

## Description

The present invention relates to detecting colour burst signal amplitude, in particular for an automatic colour control (ACC) circuit.

In general, the colour saturation of a colour image depends on the input level of the colour signal. An ACC circuit is one which automatically controls the amplitude (gain) of a colour signal, so as to maintain a constant colour saturation.

A colour signal is transmitted by being modulated into a colour difference signal. For example, the colour difference signal in a colour television varies in dependence upon variations of condition in the transmission line due to interference (noise), antenna mismatch, etc. Moreover, even differences in the frequency characteristics of a tuner circuit can cause variations from receiver to receiver. A colour signal can be transmitted by being modulated into I and Q signals having phase differences of 47° and 237°, respectively, in relation to the colour burst signal.

Accordingly, an ACC circuit becomes necessary for maintaining approximately the same level in the carrier colour signal input to the colour demodulation circuit, with respect to varying conditions. The ACC circuit detects the amplitude of a reference signal, and if the reference level is lower than a nominal value, the ACC circuit controls the amplification of the colour difference signal accordingly.

The colour information of a colour television is divided into a colour burst signal and a colour signal carrier. Among these two signals, the carrier colour signal cannot be used for obtaining the proper level of the colour signal, which is a must for ACC operation, because it varies with picture content. On the other hand, the level of colour burst signal varies little over picture content, so that it can be used as the reference signal.

In a digital image processing apparatus, all internal signal processing is carried out digitally. Therefore, to embody the ACC circuit in a digital form, the reference signal, the colour burst signal, is sampled to obtain its amplitude. However, since the burst signal is a 3.58MHz sinusoidal wave signal, the sampling is difficult.

Accordingly, a conventional apparatus for detecting the amplitude of a colour burst signal multiplies the received burst signal by a sine wave and cosine wave each having the same frequency (e.g., 3.58MHz for NTSC systems) as the burst signal, thereby to obtain two colour difference components R-Y and B-Y. These multiplied results are converted into respective DC components by means of a low-pass filter. Here, the low-pass-filtered R-Y and B-Y signals, become DC values so that the sampling processing can be simplified.

In the conventional apparatus for detecting burst signal amplitude, however, if the sine wave and cosine wave, both of which should be multiplied by the burst signal, are not in phase with the burst signal, an error is produced due to the phase difference. Therefore, the low-pass-filtered R-Y and B-Y signals do not have the proper amplitude, which can thereby cause a problem in that the ACC circuit is unstable (oscillates).

An apparatus for controlling the amplitude of a burst signal is disclosed in U.S. Patent No. 4,466,015, which is not affected by changes in the phase of the sampled signal (burst signal) while determining the level of the colour signal. This apparatus samples the burst signal of the I and Q signals which are demodulated by a chrominance signal amplifier, in accordance with sampling pulses having 90° phase difference with respect to each other. Here, a difference value (error signal) between the square of the sampling result and a reference signal is used to control the gain of the chrominance signal amplifier.

The sampling pulse of the above-described apparatus is always locked at the quadrupled frequency (4fsc) of the burst signal, and an I-sampling clock and Q-sampling clock having a 90° phase difference with respect to each other. The I-signal and Q-signal are then averaged and the averaged value is used to access a ROM. At this point, the chrominance signal amplitude is controlled using the error signal, i.e., the difference between the reference signal stored in the ROM and the input I-signal (or Q-signal). Therefore, in such an apparatus, the frequency of the system clock is restricted to a multiple of the burst signal.

EP-A-0098723 (RCA Corp) is an automatic colour control apparatus for a digital television receiver in which colour control is performed by carrying out quadrature demodulation of the colour sub-carrier to produce colour signal digital words I and Q which are sampled and latched during the colour sub-carrier burst. The sample digital words are each squared and are then summed together. The summed digital word is compared to a chromareference digital word and the difference digital word is employed to scale the colour sub-carrier digital words. Again, in this apparatus, the frequency of the system clock is restricted to a multiple of the burst signal ($4f_{sc}$).

Similar ACC's are disclosed in EP-A-0 164 274 and in "Patent Abstracts of Japan" Vol. 13 No. 150 (E-742), April 12, 1989 (JP-A-063 309 088).

However, at present, since not all video apparatuses such as NTSC and PAL televisions and 8mm VCRs have system clocks of the proper frequency (a multiple of the burst signal), the gain controlling apparatus lacks compatibility.

The present invention aims to provide an apparatus for detecting colour burst amplitude, said apparatus separates the burst signal into first and second chrominance reference signals by using a carrier signal of an arbitrary frequency, and thereby uses the amplitudes of the separated signals to detect the level of the colour burst signal regardless of the phase difference between the burst signal and the demodulated carrier signal.

It is still another aim to provide an automatic colour control (ACC) circuit of a digital video apparatus using a system clock having an arbitrary frequency obtained by multiplying the colour burst signal by a carrier signal of an arbitrary frequency, and then squaring the multiplied value.

According to one aspect of the present invention, there is provided an apparatus for detecting colour burst signal amplitude, comprising: means for respectively separating said burst signal into a first chrominance reference signal and a second chrominance reference signal having a predetermined phase relationship; squaring means for generating squared components by squaring said first chrominance reference signal and said second chrominance reference signal; and outputting means for adding together the squared components of said first and second chrominance reference signals to provide an output signal indicative of the amplitude value of said burst signal, the apparatus being characterised in that said means for respectively separating said burst signal into first and second chrominance reference signals comprises a first multiplier for multiplying the burst signal by a first carrier signal and a second multiplier for multiplying the burst signal by a second carrier signal, said first and second carrier signals being expressed as a sinewave and a cosine wave, respectively, each having the same frequency as that of said burst signal but not phase-locked thereto.

Preferably, said outputting means further comprises means for calculating the square root of the summation of the squared components of said first and second chrominance reference signals.

Said separating means may comprise first and second chrominance reference signal amplitude detecting means said first chrominance reference signal amplitude detecting means including a first multiplier for multiplying said burst signal by said first carrier signal and a first low pass filter for passing a lower band component of the output signal of said first multiplier and said second chrominance reference signal amplitude detecting means including a second multiplier for multiplying said burst signal by the second carrier signal and, a second low pass filter for passing a lower band component of the output signal of said second multiplier.

Preferably, provided that an instantaneous value of said burst signal is $A\mathit{sin}(2\pi f_{sc}t+\pi)$, the instantaneous value of said first carrier signal is $2\mathit{sin}(2\pi f_{sc}t + \theta)$

Preferably, provided that an instantaneous value of said burst signal is $A\mathit{sin}(2\pi f_{sc}t+\pi)$, the instantaneous value of said second carrier signal is $2\mathit{cos}(2\pi f_{sc}t + \theta)$.

Preferably, said separating means comprises: first latch means for latching said first chrominance reference signal output from said first low-pass filter for a predetermined burst period; second latch means for latching said second chrominance reference signal output from said second low-pass filter, for a predetermined burst period; and selecting means, controlled by a second burst pulse signal for alternately selecting the output of said first latch means or the output of said second latch means depending on whether said second burst pulse signal is 1 or 0; and wherein said squaring and outputting means comprises operation means controlled by a third burst pulse signal and depending on whether said third burst pulse signal is 1 or 0, either outputting the selected signal which is input through a first node thereof, in a squared form or performing a square-root operation to a signal which is input through a second input node thereof, via an adding means adding both selected signals in said squared form supplied from the output of said operation means, said signal being fed to a further latch means controlled by a fourth burst pulse signal for latching said signal indicative of the amplitude value of said burst signal.

The invention extends to an automatic colour control (ACC) circuit provided with an apparatus, according to any of the preceding aspects of the invention. The invention extends also to a video signal processing apparatus provided with such an ACC circuit. Such an apparatus may comprise a television receiver or monitor, or a video recorder and/or player.

For a better understanding of the invention, and to show how embodiments of the same may be carried into effect, reference will now be made, by way of example, to the accompanying diagrammatic drawings, in which:

Figure 1 is a block diagram of one example of an apparatus for detecting colour burst signal amplitude, according to the present invention;

Figure 2 is a block diagram showing a carrier generator for producing a carrier signal;

Figure 3A shows the data of the carrier signal at sampling points, and Figure 3B shows addresses produced by being synchronized by a sampling clock;

Figure 4 shows an automatic colour controller;

Figure 5 is one example of a circuit diagram of an apparatus for detecting colour burst signal amplitude according to an embodiment of the present invention;

Figures 6A-6J constitute an operational timing diagram for the apparatus for detecting colour burst signal amplitude as shown in Figure 5; and

Figure 7 is a circuit diagram of an apparatus for detecting colour burst signal amplitude according to another embodiment of the present invention.

Firstly, a conventional method for detecting colour burst signal amplitude will be briefly described, for a better understanding of the present invention.

In the NTSC system, the colour burst signal $E_b$ is expressed as:

$$E_b = A\mathit{sin}(2\pi f_{sc}t+\pi) \quad (1)$$

Given that the B - Y colour difference signal is a cosine component of $E_b$, the B-Y signal can be obtained by multiplying the signal $E_b$ by a sine wave (sinusoidal wave) having the same frequency as that of the burst signal, which is namely a first carrier signal for demodulation, and then performing a low-pass-filtering operation to the result of the multiplication. That is,

$$(B\text{-}Y)' = E_b 2\mathit{sin}(2\pi f_{sc}t+\theta)$$

$$= A\mathit{sin}(2\pi f_{sc}t+\pi) \times 2\mathit{sin}(2\pi f_{sc}t+\theta)$$

$$= A\mathit{cos}(\pi-\theta)-A\mathit{cos}(2\cdot 2\pi f_{sc}t + \pi+\theta) \quad (2)$$

Then, the second term of the right side of the bottom equation is removed from Equation (2) via low-pass-filtering, which thereby results in a new B-Y value as shown in Equation (3).

$$B\text{-}Y = A\mathit{cos}(\pi-\theta) \quad (3)$$

Here, only the cosine component appears.

Similarly, given that the R-Y colour difference signal is a sine component of $E_b$, the R-Y signal can be obtained by multiplying the signal $E_b$ by a cosine wave having the same frequency as that of the burst signal, which is namely a second carrier signal for demodulation, and then performing a low-pass-filtering operation to the result of the multiplication. That is,

$$(R\text{-}Y)' = E_b 2\mathit{cos}(2\pi f_{sc}t+\theta)$$

$$= A\mathit{cos}(2\pi f_{sc}t+\pi) \times 2\mathit{sin}(2\pi f_{sc}t+\theta)$$

$$= A\mathit{sin}(\pi-\theta)-A\mathit{cos}(2\cdot 2\pi f_{sc}t+\pi+\theta) \quad (4)$$

Here, too, the second term of the right side of the bottom equation is removed from Equation (4) via low-pass-filtering, which thereby results in a new R-Y value as shown in Equation (5).

$$R\text{-}Y = -A\mathit{sin}(\pi-\theta) \quad (5)$$

Here, only the sine component appears.

In Equations (3) and (5), where the phase difference between the signals to be multiplied by the burst signal, i.e., the first and second carrier signals, does not exist so that θ becomes zero, the low-pass-filtered R-Y and B-Y colour difference signals become:

$$B\text{-}Y = A\mathit{cos}\theta$$

$$= A \qquad (6)$$

$$R\text{-}Y = -A\,sin\theta$$

$$= 0 \qquad (7)$$

That is, in the case of no phase difference, just the B-Y signal is selected for obtaining the amplitude value of the burst signal.

However, since θ is not zero if the phases of demodulated carrier chrominance signal and the burst signal are not identical, the B -Y and R- Y components have a phase difference by as much as the angle θ, respectively. Accordingly, an accurate burst signal amplitude would be difficult to determine.

Preferred embodiments of the present invention may provide a method by which the amplitude of the colour burst signal is accurately determined by a simple manipulation, even in the event of phase errors.

Moreover, preferred embodiments of the present invention can be applied to any digital image apparatus using a clock signal whose frequency is any multiple of the burst signal, and even to one using an arbitrary system clock frequency.

A preferred method according to the present invention obtains each squared value of the low-pass-filtered R-Y and B-Y signals, adds the two together and utilizes the sum thereof.

Referring now to Figure 1, the illustrated amplitude detecting apparatus comprises a first chrominance-reference-signal-amplitude detector 12 for receiving the burst signal extracted from the input video signal thereby to produce the low-pass-filtered and squared signal on a B-Y axis; a second chrominance-reference-signal-amplitude detector 14 for receiving the burst signal extracted from the input video signal thereby to produce the low-pass-filtered and squared signal on an R- Y axis; and an adder 16 for receiving the outputs of the first and second amplitude detectors 12 and 14 and summing them.

First amplitude detector 12 comprises a first multiplier 12a for multiplying the burst signal by a first carrier signal which is a sine wave having the same frequency as that of the burst signal; a first low-pass filter 12b for removing the components higher than the second harmonic wave from the output signal of first multiplier 12a; and a first squaring device 12c for receiving and squaring the output signal of first low-pass filter 12b to be provided as a low-pass-filtered and squared signal on the B-Y axis.

Second amplitude detector 14 comprises a second multiplier 14a for multiplying the burst signal by a second carrier signal which is a cosine wave having the same frequency as that of the burst signal; a second low-pass filter 14b for removing the components higher than the second harmonic wave from the output signal of second multiplier 14a; and a second squaring device 14c for receiving and squaring the output signal of second low-pass filter 14b to be provided as a low-pass-filtered and squared signal on the R-Y axis.

Adder 16 adds the low-pas-filtered and squared signal on the B-Y axis with respect to the burst signal output from first chrominance reference signal amplitude detector 12 to the low-pass-filtered and squared signal on the R-Y axis with respect to the burst signal output from second chrominance reference signal amplitude detector 14.

Next, Figure 1 will be described in more detail in connection with Figure 2 and Figures 3A and 3B. Referring to Figure 1, first multiplier 12a receives the burst signal and multiplies it by the first carrier signal for demodulation, expressed as $2sin(2\pi f_{sc}t+\theta)$. The burst signal has a sinusoidal waveform so that it can be expressed as $A sin(2\pi f_{sc}t+\pi)$, as in Equation (1).

The output signal of first multiplier 12a has a form indicated by Equation (2). Low-pass filter 12b obtains the signal on the B-Y axis which is expressed as a cosine component, as in Equation (3).

First squaring device 12c performs the squaring of the low-pass-filtered signal to produce a $(B\text{-}Y)^2$ signal. Such a first squaring device can be embodied in real applications, by means of a logic circuit using a full adder and a multiplexer.

Second multiplier 14a multiplies the burst signal $A sin(2\pi f_{sc}t+\pi)$ by a second carrier signal for demodulation which is expressed as $2cos(2\pi f_{sc}t+\theta)$. Second low-pass filter 14b filters the signal expressed in Equation (4) from the output of second multiplier 14a. Thus, the signal expressed in Equation (5) is input to second squaring device 14c. Second squaring device 14c performs the squaring operation to its input signal to produce a $(R\text{-}Y)^2$ signal.

The $(B\text{-}Y)^2$ signal of first multiplier 12c and the $(R\text{-}Y)^2$ signal of second multiplier 14c are combined by adder 16, so that the amplitude of the burst signal can be determined.

Such operation can be explained with reference to Equations (3) and (5) as follows:

$$(R\text{-}Y)^2 + (B\text{-}Y)^2 = (A\,cos\theta)^2 + (-A\,sin\theta)^2$$

$$= A^2 \quad (8)$$

Equation (8) shows that the A-squared value is obtained without respect to the phase error $\theta$, and therefore always corresponds to the level of the burst signal. Since a squared value of colour burst signal level A is obtained using the above amplitude detecting method, it would seem logical to perform subsequently a square-root operation. However, in the ACC circuit, the nominal standard of the burst signal is judged by its relative amplitude, in order to control the colour saturation at a fixed amplitude, so that just the $A^2$ value itself can be used. Of course, if desired, the value A may be derived by a square-root operation and used in the ACC circuit.

Here, as for first multiplier 12a and second multiplier 14a, it does not matter which value is given as the amplitude value of the signals $sin(2\pi f_{sc}t+\theta)$ and $cos(2\pi f_{sc}t+\theta)$ which are then multiplied by the burst signal, since the resulting burst level will vary proportionally to the given value. In this embodiment, two is used as the amplitude, merely for convenience.

Figure 2 is a block diagram of a carrier generator producing the first and second carrier signals. An arbitrary-frequency clock signal CLK is adopted so that, for example, a sine wave signal with its carrier signal $sin(2\pi f_{sc}t)$ is described. When $f_{sc}/f_s$=2/5 ($f_{sc}$ is the frequency of a carrier signal and $f_s$ is the frequency of the sampling clock signal), the signal $sin(2\pi f_{sc}t)$ whose frequency is 2MHz is sampled at a 5MHz sampling frequency, as shown in Figure 3A.

The sine wave signal of Figure 3A can be digitized such that the amplitudes of the signal at the sampling points are stored in a ROM 18b, and then read in a sequence. At this point, ROM 18b has five addresses, 000, 001, 010, 011 and 100, and has the data values corresponding to $sin(0)$, $sin(2,\pi/5)$, $sin(2\pi 2/5)$, $sin(2\pi 3/5)$ and $sin(2\pi 4/5)$ sequentially stored in respective addresses.

The data can be expressed using any four bits. Here, for example, $sin(0)$ = 0000, $sin(2\pi/5)$ = 0111, $sin(2\pi 2/5)$ =0100, $sin(2\pi 3/5)$=1111 and $sin(2\pi 4/5)$=1100.

Therefore, ROM 18b can be composed as shown by Table 1:

<Table 1>

| ADDRESS | DATA |
|---|---|
| 000 | 0000 |
| 001 | 0111 |
| 010 | 0100 |
| 011 | 1111 |
| 100 | 1100 |

Here, the data stored in ROM 18b are output via latch 18c.

That is, to generate wave $sin(2\pi f_{sc}t)$ according to the sampling frequency $f_s$ in the case of $f_s/f_{sc}$=2/5, the address is generated by address generator 18a for accessing ROM 18b by the increase of two steps at each sampling, for example, 000, 010, 100, 001, 011, 000,... as shown in Figure 3B. Here, the read out data is $sin(2\pi f_{sc}t)$.

The $sin(2\pi f_{sc}t)$ signal is produced using an arbitrary clock frequency obtaining the relationship between sampling the clock signal's frequency $f_s$ and the frequency $f_{sc}$, in which the value of $f_s$ is equal to the number of addresses of ROM 18b and a signal within one period is sampled at a uniform interval so as to be stored in ROM 18b.

Figures 3A and 3B and Table 1 are for brief explanation. However, when an actual $sin(2\pi f_{sc}t)$ signal is sampled, the address obtained by address generator 18a is one to which the $f_s$ value is added at each increase (or decrease) of the sampling clock signal. Here, if, in the ratio $f_s/f_{sc}$, the numerator $f_s$ exceeds the denominator $f_{sc}$, a modulo operation is executed such that the denominator is subtracted from the numerator and the remainder is used as the address.

Since $cos(2\pi f_{sc}t)$ signal is equal to $sin(2\pi f_{sc}t+\pi/2)$, the data can be read out by varying the address sequence generated by address generator 18a, using the same method.

Figure 4 is an ACC circuit for a better understanding of the illustrated embodiments of the present invention. Referring to Figure 4, the ACC circuit is to adjust the gain factor of the input chrominance signal, using the burst signal level ($A^2$ or A) extracted via the colour burst signal amplitude detecting apparatus shown in Figure 1. When the level of the colour burst signal becomes greater than a nominal level, or vice versa, the ACC circuit increases the gain factor of the chrominance signal being input, so that the chrominance signal can be maintained at a constant level.

Figure 5 is a circuit diagram showing the apparatus for detecting colour burst signal amplitude according to one embodiment of the present invention. Referring to Figure 5, the signal entering a first multiplier 101 is a chrominance signal having been separated from a luminance signal, and the chrominance signal is expressed as follows:

$$C = C_b cos(2\pi f_{sc}t) + C_r sin(2\pi f_{sc}t) \quad (9)$$

Where C is the chrominance signal, $C_b$ is the B-Y signal and $C_r$ is the R-Y signal.

First multiplier 101 multiplies the burst signal loaded on the chrominance signal by the demodulated carrier signal $2sin(2\pi f_{sc}t)$. The burst signal is expressed as Equation (1).

The output of first multiplier 101 is expressed as Equation (2). A first low-pass filter 111 receives the signal expressed as Equation (1) and output from first multiplier 101, and passes only the base-band portion thereof. Thereafter, only the B - Y signal expressed as Equation (3) is input to the first input node of a first adder 121.

The output of first adder 121 is latched at a first latch 131 which then feeds its output back to the second input node of first adder 121.

First latch 131 is latched for the "high" interval of a clear signal and is thereby cleared at the falling edge thereof.

A second latch 141 receives the burst pulse (BFP), shown in Figure 6A as a clock signal, and latches the latched output of first latch 131 for the burst period.

On the other hand, the burst signal loaded on the chrominance signal input to a second multiplier 102 is expressed as Equation (1), and second multiplier 102 multiplies the burst signal by the demodulated second carrier signal $2cos(2\pi f_{sc}t)$.

A second low-pass filter 112 passes only the base-band portion of the output of second multiplier 102 expressed as Equation (2). The R-Y component, expressed as Equation (5), is input to the first input node of second adder 122.

Second adder 122 adds the R-Y colour difference signal component to the output fed back from a third latch 132 during the "high" interval of the clear signal of Figure 6C, and third latch 132 latches the result.

Here, the waveform of the clock signal CLK which is input to first low-pass filter 111, first latch 131, second low-pass filter 112 and third latch 132 is shown in Figure 6B.

A fourth latch 142 receives as a clock pulse the burst pulse BFP which is shown in Figure 6A, and latches the latched output of third latch 132 for the burst period.

Upon receipt of a signal D1BFP of Figure 6D, which is the BFP signal (Figure 6A) delayed by one clock period, via a selection node S, a multiplexer 150 selects the output B-Y of second latch 141 for the "high" interval (logic "1") of Figure 6D after the burst signal (Figure 6A) changes to "low" state, and selects the output R-Y of fourth latch 142 for the "low" interval (logic "0") of Figure 6D after changing from "high" (logic "1") to "low" (logic "0").

Square/square-root (SQR/SQRT) circuit 160 performs a squaring operation when the signal input via selection control node S is "1," and performs a square-root operation when the signal is "0." Here, the signal input at selection control node S is a signal D2BFP of Figure 6E, which is the BFP signal delayed by two clock periods. SQR/SQRT circuit 160 operates as a squaring device for the "high" interval of the signal of Figure 6E after the signal shown in Figure 6D changes to "low" (logic "0").

When SQR/SQRT circuit 160 operates as a squaring device, it squares the output signal B-Y, if any, of multiplexer 150 to temporarily store the result in a fifth latch 171, or squares the output signal R-Y, if any, of multiplexer 150 to temporarily store the result in a sixth latch 172.

At this point, the waveforms of (B-Y) and (R-Y) signals are shown in Figure 6G, the waveform of $(B\text{-}Y)^2$ is shown in Figure 6H, and the waveform of $(R\text{-}Y)^2$ is shown in Figure 6I.

A third adder 180 sums the outputs stored in fifth and sixth latches 171 and 172, so as to send the result to the "0" node of SQR/SQRT circuit 160. SQR/SQRT circuit 160 operates as a square-root device for the "low" interval of the signal shown in Figure 6E, after the signal changes from "high" to "low."

When SQR/SQRT circuit 160 operates as a square-root device, it obtains the square root of the signal $(B\text{-}Y)^2+(R\text{-}Y)^2$ input through its input node "0." The moment that a D3BFP signal goes from "high" to "low" as shown in Figure 6F, a seventh latch 173 latches the output of SQR/SQRT circuit 160 so as to produce the desired burst level which is shown in Figure 6J.

Figure 7 is a block diagram of apparatus for detecting colour burst signal amplitude according to another embodiment of the present invention. Referring to Figure 7, like components are denoted by the same reference numerals as in Figure 5, and thus, a detailed description of the construction and operation thereof will be omitted.

A first squaring device 191 squares the output B - Y latched by second latch 141, and a second squaring device 192 squares the latched output of a fourth latch 142. Also, a third adder 200 adds the output $(B\text{-}Y)^2$ of first squaring device 191 to the output $(R\text{-}Y)^2$ of second squaring device 192, to send the result to square-root calculator 210. A square-root calculator 210 produces a burst level A. Here, $A = [(B\text{-}Y)^2+(R\text{-}Y)^2]^{1/2}$.

The squaring/square-root circuit, the squaring device and the square-root device shown in Figures 5 and 7 are disclosed by Kai Hwang (see "Computer Arithmetic Principles Architecture and Design," pp.359-366). Accordingly, now that squaring/square-root device 160 can be constructed for both squaring and square-root operation, it is more effective than the squaring device and square-root calculator which are separately constructed.

As described above, in the methods for detecting colour burst signal amplitude and the apparatus therefor according to the illustrated embodiments of present invention, the B-Y and R-Y colour difference signals of the input burst signal are obtained by using a carrier signal having cosine and sine components, and the amplitude of the two colour difference signals is calculated so as to obtain the level of the burst signal. Therefore, accurate burst signal amplitudes can be obtained regardless of the phase difference between the burst signal and the demodulated carrier signal.

The apparatus according to preferred embodiments of the present invention can be applied not only to burst signal amplitude detection in a colour image processing apparatus, but also to detecting the level (maximum instantaneous value) of a signal having a fixed-level sinusoidal waveform such as a burst signal.

Also, it should be understood that the present invention can be embodied for a variety of broadcast systems including NTSC and PAL systems with the aid of this apparatus by varying the carrier frequency $f_{sc}$.

## Claims

**1.** An apparatus for detecting colour burst signal amplitude, comprising:

means (12a, 12b, 14a, 14b) for respectively separating said burst signal into a first chrominance reference signal and a second chrominance reference signal having a predetermined phase relationship;

squaring means (12c, 14c) for generating squared components by squaring said first chrominance reference signal and said second chrominance reference signal; and

outputting means (16) for adding together the squared components of said first and second chrominance reference signals to provide an output signal indicative of the amplitude value of said burst signal, the apparatus being characterised in that said means (12a, 12b, 14a, 14b) for respectively separating said burst signal into first and second chrominance reference signals comprises a first multiplier for multiplying the burst signal by a first carrier signal and a second multiplier for multiplying the burst signal by a second carrier signal, said first and second carrier signals being expressed as a sinewave and a cosine wave, respectively, each having the same frequency as that of said burst signal but not phase-locked thereto.

**2.** An apparatus according to claim 1, wherein said outputting means (16) further comprises means (190; 210) for calculating the square root of the summation of the squared components of said first and second chrominance reference signals.

**3.** An apparatus according to claim 1 or 2, wherein said separating means (12a, 12b, 14a, 14b) comprises first and second chrominance reference signal amplitude detecting means (12), said first chrominance reference signal amplitude detecting means (12) including a first multiplier (12a) for multiplying said burst signal by said first carrier signal and a first low pass filter (12b, 111) for passing a lower band component of the output signal of said first multiplier (12a), and said second chrominance reference signal amplitude detecting means (14) including a second multiplier (14a) for multiplying said burst signal by the second carrier signal and, a second low pass filter (14b) for passing a lower band component of the output signal of said second multiplier (14a).

**4.** An apparatus according to claim 1, 2 or 3, wherein, provided that an instantaneous value of said burst signal is $A\mathit{sin}(2\pi f_{sc}t+\pi)$, the instantaneous value of said first carrier signal is $2\mathit{sin}(2\pi f_{sc}t+\theta)$

**5.** An apparatus according to claim 1, 2, 3 or 4, wherein, provided that an instantaneous value of said burst signal is $A\mathit{sin}(2\pi f_{sc}t+\pi)$, the instantaneous value of said second carrier signal is $2\mathit{cos}(2\pi f_{sc}t+\theta)$.

**6.** An apparatus according to claim 3, wherein said separating means (12a, 12b, 14a, 14b) comprises:

first latch means (131, 141) for latching said first chrominance reference signal output from said first low-pass filter (111), for a predetermined burst period (BFP);

second latch means (132, 142) for latching said second chrominance reference signal output from said second low-pass filter, for a predetermined burst period (BPF); and

selecting means (150), controlled by a second burst pulse signal (D1BFP) for alternately selecting the output of said first latch means (131, 141) or the output of said second latch means (132, 142) depending on whether said second burst pulse signal is 1 or 0; and

wherein said squaring and outputting means (12c, 14c, 16) comprises operation means (160) controlled by a third burst pulse signal (D2BFP) and depending on whether said third burst pulse signal is 1 or 0, either outputting the selected signal which is input through a first node (1) thereof, in a squared form or performing a square-root operation to a signal which is input through a second input node (0) thereof, via an adding means (180) adding both selected signals in said squared form supplied from the output of said operation means (160), said signal being fed to a further latch means (190) controlled by a fourth burst pulse signal (D3BFP) for latching said signal indicative of the amplitude value of said burst signal.

**7.** An automatic colour control (ACC) circuit provided with an apparatus, according to any of the preceding claims.

**8.** A video signal processing apparatus provided with an ACC circuit according to claim 7.

**9.** An apparatus according to claim 8, comprising a television receiver or monitor, or a video recorder and/or player.

## Patentansprüche

**1.** Eine Vorrichtung zur Erfassung der Farbsynchronsignal-Amplitude, die umfaßt:

eine Einrichtung (12a, 12b, 14a, 14b), um jeweils das genannte Synchronsignal in ein erstes Chrominanzbezugssignal und ein zweites Chrominanzbezugssignal zu trennen, die eine vorbestimmte Phasenbeziehung haben;

eine Quadriereinrichtung (12c, 14c) zur Erzeugung quadrierter Komponenten, indem das genannte erste Chrominanzbezugssignal und das genannte zweite Chrominanzbezugssignal quadriert werden; und

eine Ausgabeeinrichtung (16), um die quadrierten Komponenten des genannten ersten und zweiten Chrominanzbezugssignals zusammenzuaddieren, um ein Ausgangssignal bereitzustellen, das den Amplitudenwert des genannten Synchronsignals angibt, wobei die Vorrichtung **dadurch gekennzeichnet** ist, daß die genannte Einrichtung (12a, 12b, 14a, 14b) zum jeweiligen Trennen des genannten Synchronsignals in ein erstes und zweites Chrominanzbezugssignal eine erste Multiplikationseinrichtung zur Multiplikation des Synchronsignals mit einem ersten Trägersignal und eine zweite Multiplikationseinrichtung zur Multiplikation des Synchronsignals mit einem zweiten Trägersignal umfaßt, wobei das genannte erste und zweite Trägersignal als eine Sinuswelle bzw. eine Kosinuswelle ausgedrückt sind, von denen jedem dieselbe Frequenz wie die des genannten Synchronsignals aber keine Phasenverriegelung damit aufweist.

**2.** Eine Vorrichtung gemäß Anspruch 1, wobei die genannte Ausgangseinrichtung (16) des weiteren eine Einrichtung (190; 210) zur Berechnung der Quadratwurzel der Aufsummierung der quadrierten Komponenten des genannten ersten und zweiten Chrominanzbezugssignals umfaßt.

**3.** Eine Vorrichtung gemäß Anspruch 1 oder 2, wobei die genannte Trenneinrichtung (12a, 12b, 14a, 14b) eine Amplitudenbestimmungseinrichtung (12) für das genannte erste und zweite Chrominanzbezugssignal umfaßt, die genannte Amplitudenbestimmungseinrichtung (12) für das genannte erste Chrominanzbezugssignal eine erste Multiplikationseinrichtung (12a) zur Multiplikation des genannten Synchronsignals mit dem genannten ersten Trägersignal und ein erstes Tiefpaßfilter der (12b, 111) einschließt, um eine niedrigerere Bandkomponente des Ausgangssignals der genannten ersten Multiplikationseinrichtung (12a) hindurchzulassen, und die genannte Amplitudenbestimmungseinrichtung (14) für das genannte zweite Chrominanzbezugssignal eine zweite Multiplikationseinrichtung (14a) zur Multiplikation des genannten Synchronsignals mit dem genannten zweiten Trägersignal und ein zweites Tiefpaßfilter (14b) einschließt, um eine niedrigerere Bandkomponente des Ausgangssignals der genannten zweiten Multiplikationseinrichtung (14a) hindurchzulassen.

**4.** Eine Vorrichtung gemäß Anspruch 1, 2 oder 3, wobei, vorausgesetzt, daß ein momentaner Wert des genannten Synchronsignals $A\sin(2\pi f_{sc}t+\pi)$, der momentane Wert des genannten ersten Trägersignals $2\sin(2\pi f_{sc}t+\theta)$ ist.

5. Eine Vorrichtung gemäß Anspruch 1, 2, 3 oder 4, wobei, vorausgesetzt, daß ein momentaner Wert des genannten Synchronsignals $A\sin(2\pi f_{sc}t+\pi)$, der momentane Wert des genannten zweiten Trägersignals $2\cos(2\pi f_{sc}t+\theta)$ ist.

6. Eine Vorrichtung gemäß Anspruch 3, wobei die genannte Trenneinrichtung (12a, 12b, 14a, 14b) umfaßt:

eine erste Zwischenspeichereinrichtung (131, 141), um den genannten ersten Chrominanzbezugsignalausgang von dem genannten ersten Tiefpaßfilter (111) während einer vorbestimmten Synchronperiode (BFP) zwischenzuspeichern;

eine zweite Zwischenspeichereinrichtung (132, 142), um den genannten zweiten Chrominanzbezugsignalausgang von dem genannten zweiten Tiefpaßfilter (111) während einer vorbestimmten Synchronperiode (BFP) zwischenzuspeichern; und

eine Auswähleinrichtung (150), die durch ein zweites Synchronimpulssignal (D1BFP) gesteuert wird, um alternativ den Ausgang der genannten ersten Zwischenspeichereinrichtung (131, 141) oder den Ausgang der genannten zweiten Zwischenspeichereinrichtung (132, 142) in Abhängigkeit davon auszuwählen, ob das genannte zweite Synchronimpulssignal 1 oder 0 ist; und

wobei die genannte Quadrierungs- und Ausgabeeinrichtung (12c, 14c, 16) eine Operationseinrichtung (160) umfaßt, die von einem dritten Synchronimpulssignal (D2BFP) gesteuert wird und in Abhängigkeit davon, ob das genannte dritte Synchronimpulssignal 1 oder 0 ist, entweder das ausgewählte Signal, das über einen ersten Knoten (1) von ihr eingegeben wird, in einer quadrierten Form ausgibt oder eine Quadratwurzeloperation an einem Signal durchführt, das über einen zweiten Eingangsknoten (0) von ihr eingegeben wird, wobei über eine Addiereinrichtung (180) beide ausgewählten Signale in der genannten quadrierten Form addiert werden, die von dem Ausgang der genannten Operationseinrichtung (160) zugeführt werden, das genannte Signal einer weiteren Zwischenspeichereinrichtung (190) zugeführt wird, die durch ein viertes Synchronimpulssignal (D3BFP) zur Zwischenspeicherung des genannten Signals gesteuert wird, das den Amplitudenwert des genannten Synchronsignals angibt.

7. Eine automatische Farbsteuerungsschaltung (ACC), die mit einer Vorrichtung gemäß irgendeinem der vorhergehenden Ansprüche versehen ist.

8. Eine Videosignalverarbeitungs-Vorrichtung, die mit einer ACC-Schaltung gemäß Anspruch 7 versehen ist.

9. Eine Vorrichtung gemäß Anspruch 8, die einen Fernsehempfänger oder Bildschirm oder ein Videoaufzeichnungs- und Wiedergabegerät und/oder Videospielgerät umfaßt.

## Revendications

1. Appareil pour détecter l'amplitude d'un signal de salve couleur, comprenant :

des moyens (12a, 12b, 14a, 14b) respectivement destinés à séparer ledit signal de salve en un premier signal de référence de chrominance et en un second signal de référence de chrominance ayant une relation de phase prédéterminée;
des moyens d'élévation au carré (12c, 14c) destinés à générer des composantes élevées au carré en élevant au carré ledit premier signal de référence de chrominance et ledit second signal de référence de chrominance; et
des moyens de sortie (16) destinés à additionner les composantes élevées au carré desdits premier et second signaux de référence de chrominance pour fournir un signal de sortie indiquant la valeur de l'amplitude dudit signal de salve, l'appareil étant caractérisé en ce que lesdits moyens (12a, 12b, 14a, 14b) respectivement destinés à séparer ledit signal de salve en premier et second signaux de référence de chrominance comprennent un premier multiplicateur servant à multiplier le signal de salve par un premier signal de porteuse, et un second multiplicateur servant à multiplier le signal de salve par un second signal de porteuse, lesdits premier et second signaux de porteuse étant respectivement exprimés sous la forme d'une onde sinusoïdale et d'une onde cosinusoïdale ayant chacune la même fréquence que celle dudit signal de salve mais sans être asservies en phase à celui-ci.

2. Appareil selon la revendication 1, dans lequel lesdits moyens de sortie (16) comprennent également des moyens (190; 210) destinés à calculer la racine carrée de la somme des composantes élevées au carré desdits premier et second signaux de référence de chrominance.

3. Appareil selon la revendication 1 ou 2, dans lequel lesdits moyens de séparation (12a, 12b, 14a, 14b) comprennent des premier et second moyens de détection d'amplitude de signaux de référence de chrominance (12, 14), ledit premier moyen de détection d'amplitude de signal de référence de chrominance (12) comprenant un premier multiplicateur (12a) servant à multiplier ledit signal de salve par ledit premier signal de porteuse, et un premier filtre passe-bas (12b, 111) destiné à laisser passer une composante de bande inférieure du signal de sortie dudit premier multiplicateur (12a), et ledit second moyen de détection d'amplitude de signal de référence de chrominance (14) comprenant un second multiplicateur (14a) servant à multiplier ledit signal de salve par ledit second signal de porteuse, et un second filtre passe-bas (14b) destiné à laisser passer une composante de bande inférieure du signal de sortie dudit second multiplicateur (14a).

4. Appareil selon la revendication 1, 2 ou 3, dans lequel, à condition qu'une valeur instantanée dudit signal de salve soit $A\sin(2\pi f_{sc}t+\pi)$, la valeur instantanée dudit premier signal de porteuse est $2\sin(2\pi f_{sc}t+\theta)$.

5. Appareil selon la revendication 1, 2, 3 ou 4, dans lequel, à condition qu'une valeur instantanée dudit signal de salve soit $A\sin(2\pi f_{sc}t+\pi)$, la valeur instantanée dudit second signal de porteuse est $2\cos(2\pi f_{sc}t+\theta)$.

6. Appareil selon la revendication 3, dans lequel lesdits moyens de séparation (12a, 12b, 14a, 14b) comprennent:

des premiers moyens à verrouillage (131, 141) destinés à verrouiller ledit premier signal de référence de chrominance délivré en sortie par ledit premier filtre passe-bas (111), pendant une période de salve prédéterminée (BFP) ;
des seconds moyens à verrouillage (132, 142) destinés à verrouiller ledit second signal de référence de chrominance délivré en sortie par ledit second filtre passe-bas, pendant une période de salve prédéterminée (BFP) ; et
des moyens de sélection (150) régis par un second signal impulsionnel de salve (D1BFP) pour sélectionner alternativement la sortie desdits premiers moyens à verrouillage (131, 141) ou la sortie desdits seconds moyens à verrouillage (132, 142) selon que ledit second signal impulsionnel de salve est 1 ou 0; et
dans lequel lesdits moyens d'élévation au carré et de sortie (12c, 14c, 16) comprennent des moyens de commande (160) régis par un troisième signal impulsionnel de salve (D2BFP) et qui, selon que ledit troisième signal impulsionnel de salve est 1 ou 0, soit délivrent en sortie le signal sélectionné fourni en entrée par l'intermédiaire de leur premier noeud (1), sous une forme élevée au carré, soit exécutent une opération de racine carrée sur un signal fourni en entrée par l'intermédiaire de leur second noeud d'entrée (0), via un moyen additionneur (180) qui additionne les deux signaux sélectionnés dans ladite forme élevée au carré fournie en sortie par lesdits moyens de commande (160), ledit signal étant délivré à un moyen à verrouillage supplémentaire (190) régi par un quatrième signal impulsionnel de salve (D3BFP) pour verrouiller ledit signal indiquant la valeur de l'amplitude dudit signal de salve.

7. Circuit de commande automatique de couleur (ACC) équipé d'un appareil selon l'une quelconque des revendications précédentes.

8. Appareil de traitement de signaux vidéo équipé d'un circuit ACC selon la revendication 7.

9. Appareil selon la revendication 8, comprenant un récepteur de télévision ou un écran de contrôle de télévision, ou un enregistreur et/ou lecteur vidéo.

FIG. 1

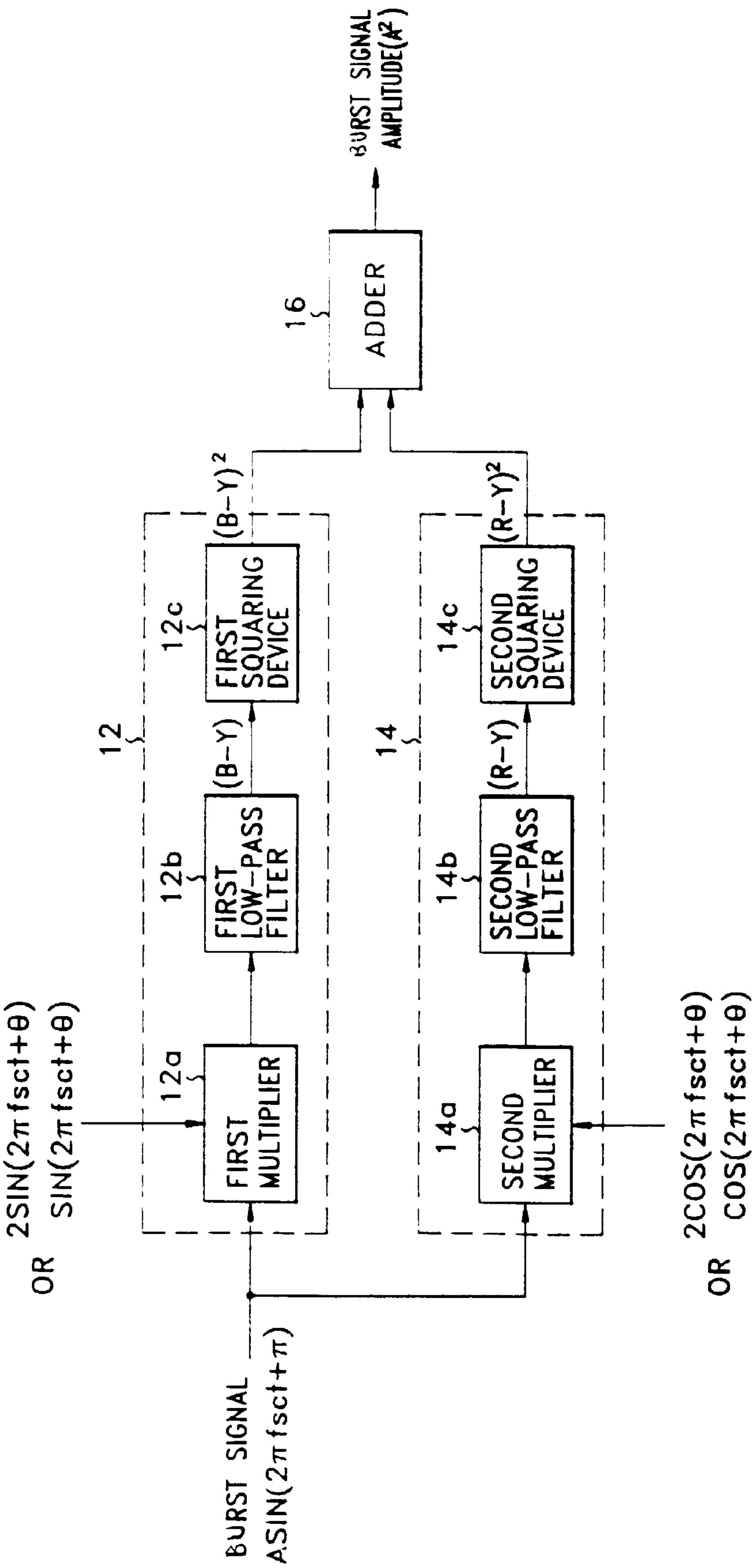
BURST SIGNAL
ASIN(2πfsct+π)
2SIN(2πfsct+θ)
OR SIN(2πfsct+θ)
2COS(2πfsct+θ)
OR COS(2πfsct+θ)
12
12a
FIRST MULTIPLIER
12b
FIRST LOW-PASS FILTER
(B-Y)
12c
FIRST SQUARING DEVICE
(B-Y)²
14
14a
SECOND MULTIPLIER
14b
SECOND LOW-PASS FILTER
(R-Y)
14c
SECOND SQUARING DEVICE
(R-Y)²
16
ADDER
BURST SIGNAL AMPLITUDE(A²)

FIG. 2

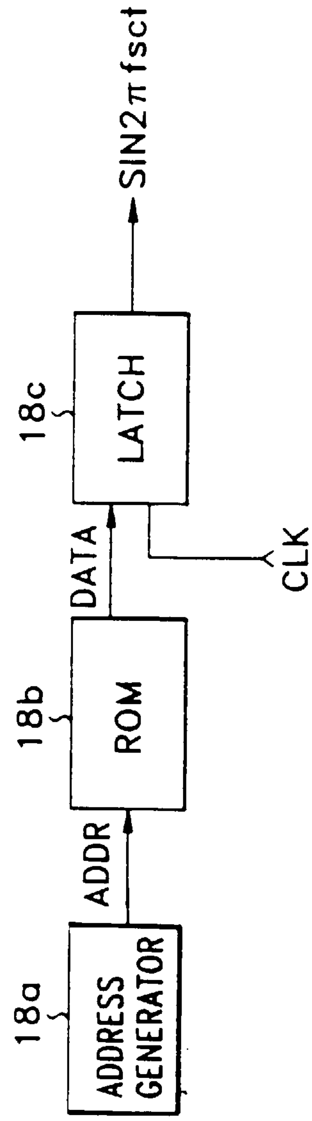


FIG. 3A

FIG. 3B

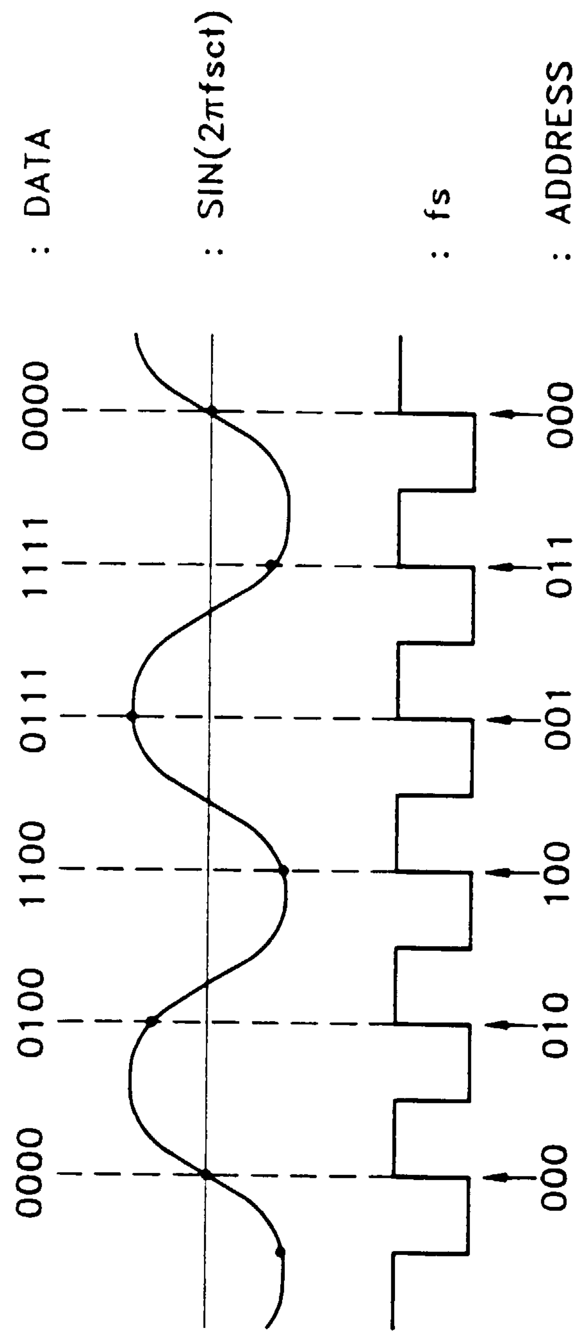

FIG. 4

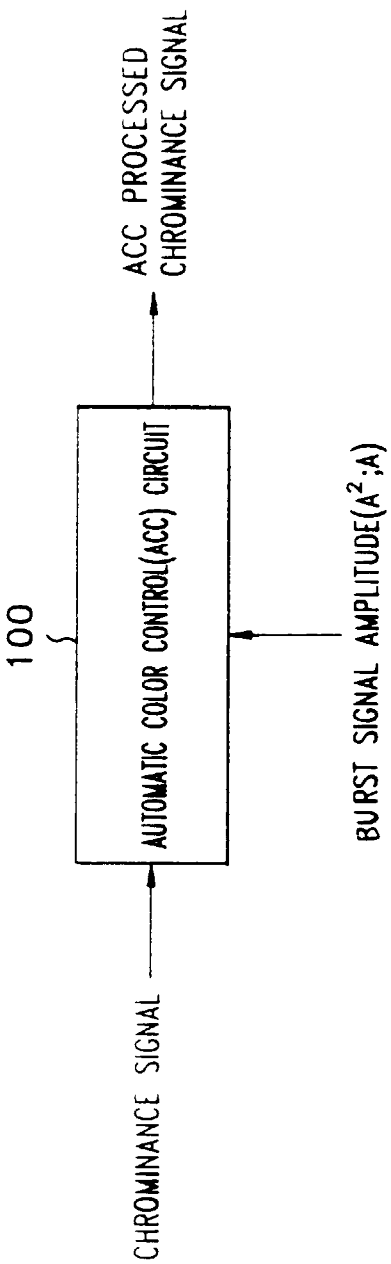
ACC PROCESSED
CHROMINANCE SIGNAL
100
AUTOMATIC COLOR CONTROL(ACC) CIRCUIT
CHROMINANCE SIGNAL
BURST SIGNAL AMPLITUDE($A^2$;A)

FIG. 5

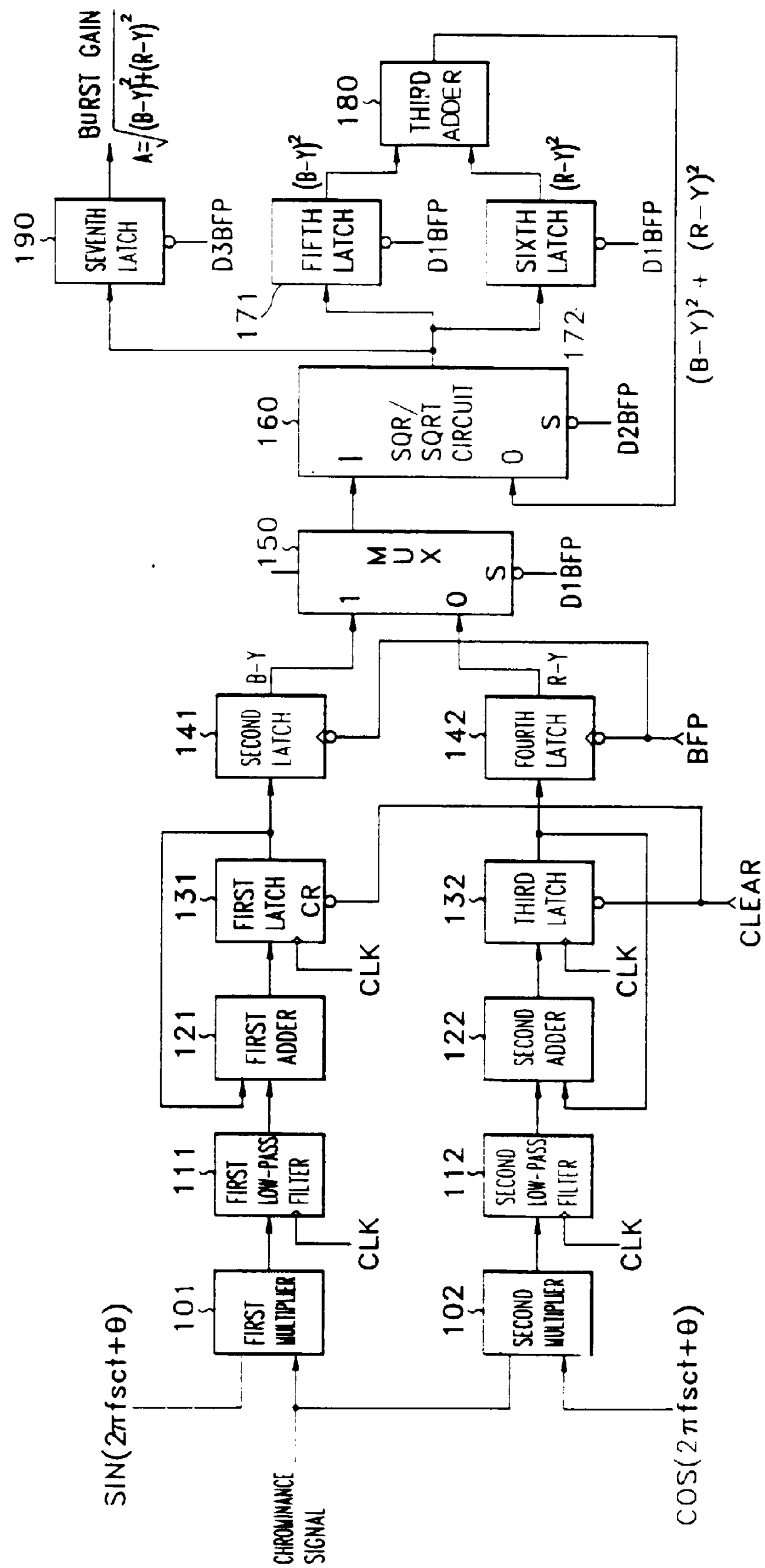
SIN(2πfsct+θ)
CHROMINANCE SIGNAL
COS(2πfsct+θ)
101
FIRST MULTIPLIER
102
SECOND MULTIPLIER
111
FIRST LOW-PASS FILTER
112
SECOND LOW-PASS FILTER
CLK
121
FIRST ADDER
122
SECOND ADDER
131
FIRST LATCH
CR
132
THIRD LATCH
CLEAR
141
SECOND LATCH
142
FOURTH LATCH
B-Y
R-Y
BFP
150
MUX
1
0
S
D1BFP
160
SQR/ SQRT CIRCUIT
I
O
S
D2BFP
171
172
FIFTH LATCH
SIXTH LATCH
(B-Y)²
(R-Y)²
D1BFP
180
THIRD ADDER
(B-Y)² + (R-Y)²
190
SEVENTH LATCH
D3BFP
BURST GAIN
A=√((B-Y)²+(R-Y)²)

FIG. 6A

FIG. 6B

FIG. 6C

FIG. 6D

FIG. 6E

FIG. 6F

FIG. 6G

FIG. 6H

FIG. 6I

FIG. 6J

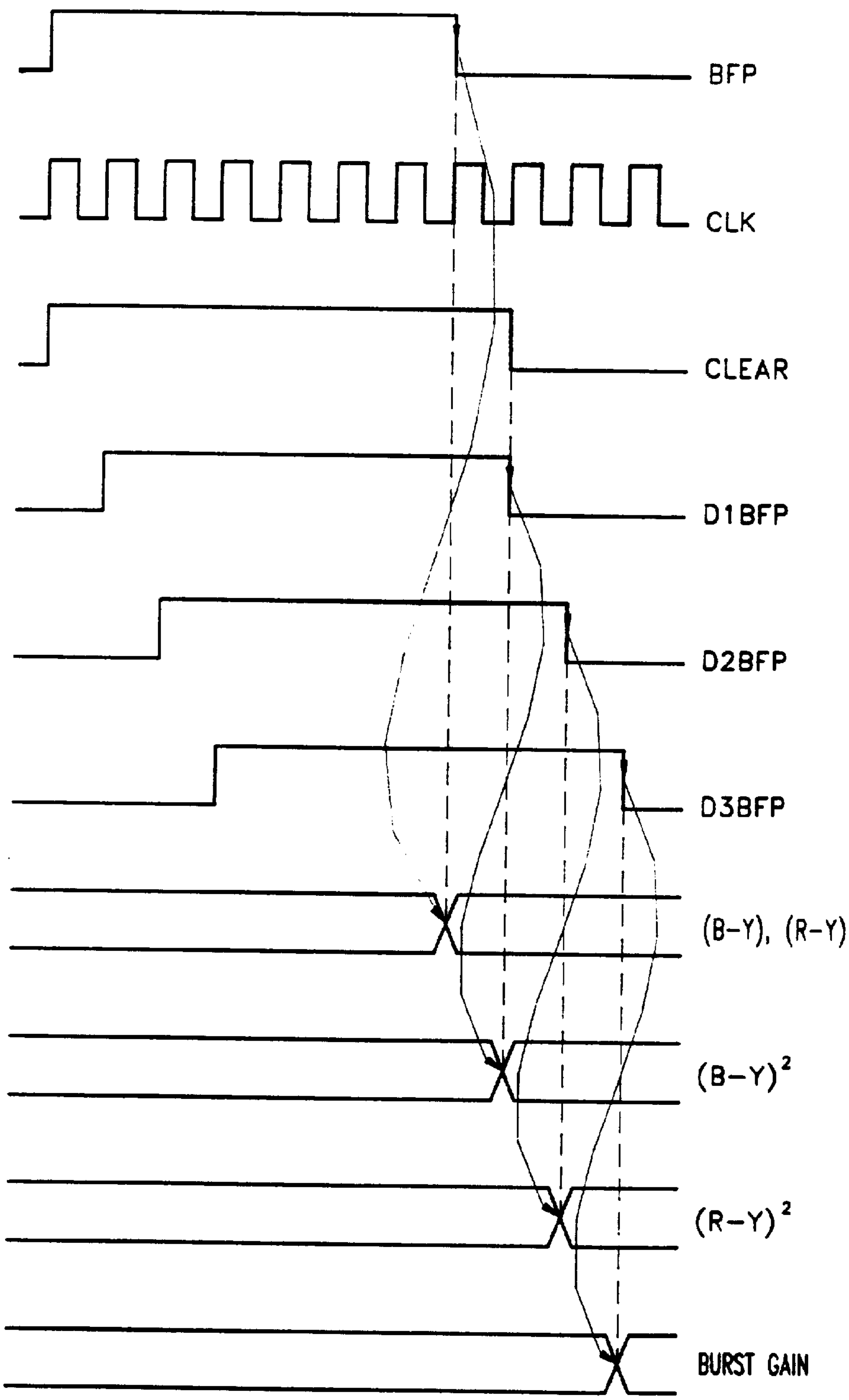

FIG. 7

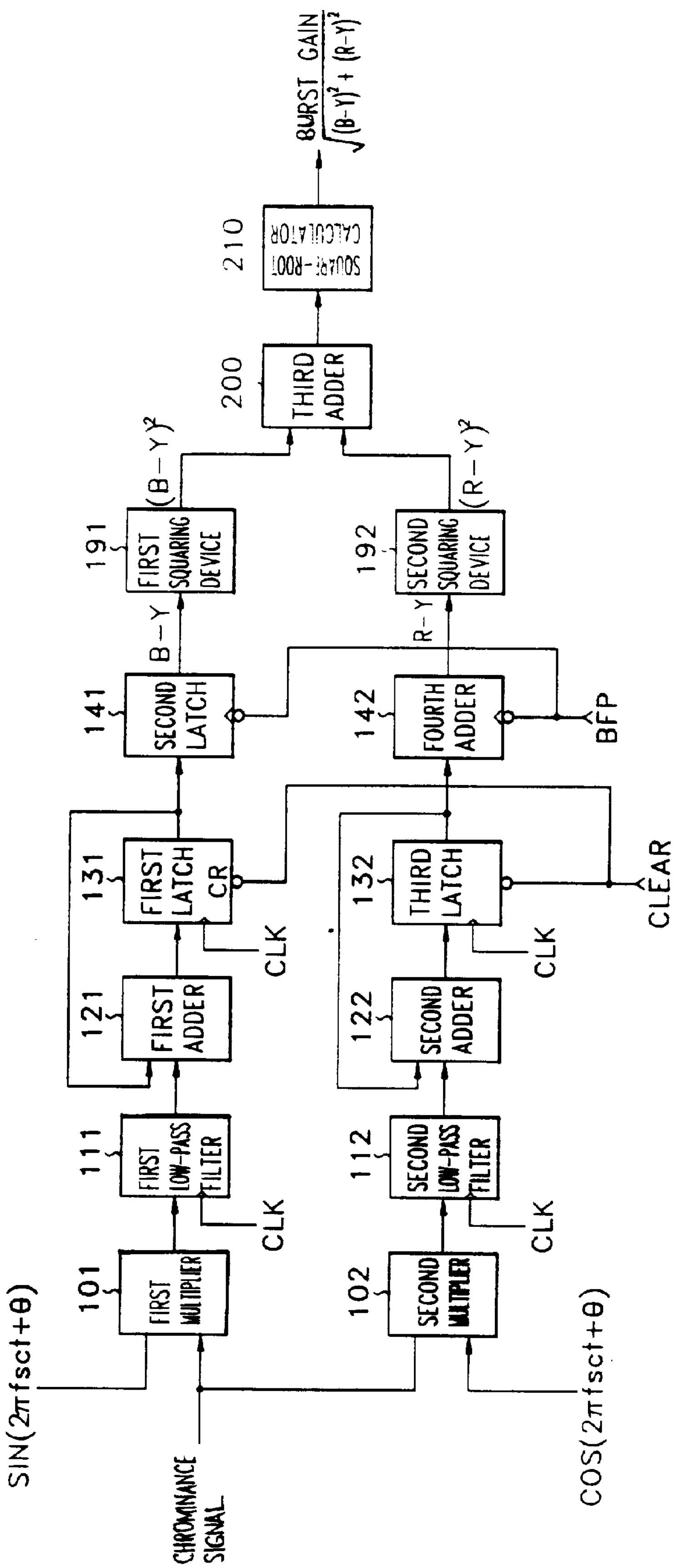
SIN(2πfsct+θ)
CHROMINANCE SIGNAL
COS(2πfsct+θ)
101
FIRST MULTIPLIER
102
SECOND MULTIPLIER
111
FIRST LOW-PASS FILTER
112
SECOND LOW-PASS FILTER
CLK
121
FIRST ADDER
122
SECOND ADDER
131
FIRST LATCH CR
132
THIRD LATCH
CLEAR
141
SECOND LATCH
142
FOURTH ADDER
BFP
B-Y
R-Y
191
FIRST SQUARING DEVICE
192
SECOND SQUARING DEVICE
(B-Y)²
(R-Y)²
200
THIRD ADDER
210
SQUARE-ROOT CALCULATOR
BURST GAIN
√((B-Y)² + (R-Y)²)